# EUROPÄISCHE PATENTSCHRIFT

(11) **EP 0 869 994 B1**
(45) Veröffentlichungstag und Bekanntmachung des Hinweises auf die Patenterteilung: **17.05.2000**
(21) Anmeldenummer: 96932577.8
(22) Anmeldetag: 20.09.1996
(51) Int. Cl.: C09C 1/36, C01G 23/08

(54) **VERFAHREN ZUR HERSTELLUNG VON TiO2-PIGMENTEN AUS TiO2-KLINKER**
PROCESS FOR PRODUCING TiO2 PIGMENTS FROM TiO2 CLINKER
PROCEDE DE FABRICATION DE PIGMENTS DE TiO2 A PARTIR DE CLINKERS DE TiO2

(30) Priorität: 30.09.1995 DE 19536657
(43) Veröffentlichungstag der Anmeldung: 14.10.1998
(73) Patentinhaber: Metallgesellschaft Aktiengesellschaft, 60325 Frankfurt am Main (DE)
(72) Erfinder: BISCHOF, Reinhard, D-46539 Dinslaken (DE); EICKSCHEN, Ralf, D-47445 Moers (DE); DUMKE, Heinrich, D-47441 Moers (DE); MEYERS, Franz, D-47506 Neukirchen (DE); KRETSCHMER, Matthias, D-47445 Moers (DE); RONKHOLZ, Horst, D-47890 Krefeld (DE)
(86) Internationale Anmeldenummer: EP9604114
(87) Internationale Veröffentlichungsnummer: WO9712943

(56) Entgegenhaltungen:
- EP-A- 0 253 139
- DE-A- 4 417 185
- DATABASE WPI Week 8329 Derwent Publications Ltd., London, GB; AN 83-714584 XP002020636 & JP,A,58 099 121 (ONAHAMA SAKAI KAGAK) , 13.Juni 1983

## Beschreibung

Die Erfindung bezieht sich auf ein Verfahren zur Herstellung von TiO₂-Pigmenten aus TiO₂-Klinker.

Verfahren zur Herstellung oder Behandlung von TiO₂-Pigmenten und TiO₂-Klinker sind bekannt. In Ullmanns Encyklopädie der technischen Chemie, 4. Auflage, Band 18, Seiten 574 bis 580, werden Verfahren zur Herstellung von Titandioxid-Pigmenten beschrieben. Beim sogenannten Sulfat-Verfahren wird ein TiO₂-Klinker erhalten, der in Form von Agglomeraten und Aggregaten vorliegt. Diese Agglomerate oder Aggregate können durch Naß- oder Trockenmahlung auf Pigmentfeinheit zerteilt werden. Bei der Mahlung werden in der Regel Mahlhilfsmittel zugegeben, die bei einer anschließenden Nachbehandlung der Pigmente als Netzmittel wirken und die Dispergierbarkeit erhöhen. Dabei ist jedoch nachteilig, daß die Dispergiermittel den Vorgang der anorganischen Nachbehandlung erschweren oder stören können.

Im Kronos-Leitfaden "Grundlagen und Anwendung von Kronos Titandioxid", Herausgeber: Kronos Titanfabriken, 1967, Seiten 218 bis 237, werden Verfahren zur Dispergierung von bereits hergestellten Titandioxid-Pigmenten beschrieben. Dabei wird herausgestellt, daß die Dispergierung von bereits hergestellten Titandioxid-Pigmenten in Zahnscheibenmühlen in Form von Stator-Rotor-Rührgeräten erfolgen kann. In diesen Rührgeräten wird eine Scherwirkung auf die Pigmentagglomerate ausgeübt, die zu ihrer Zerteilung führt.

In der DE-OS 30 28 332 wird ein Verfahren zur Herstellung einer Aufschlämmung von Rutil-Titandioxid beschrieben, bei dem vorgesehen ist, daß man vorbehandeltes Rutil-Titandioxid-Pigment, mindestens ein Dispergiermittel und Wasser zu einer ersten Mischung mit einem Feststoffgehalt von mindestens 60 % mischt und diese erste Mischung durch Behandeln in einer Dispersionsmühle in eine Agglomerat-freie zweite Mischung überführt. Die Dispersionsmühle weist ein Laufrad mit am Umfang befestigten Flügeln auf, das mit einer Wellendrehzahl von etwa 2600 min⁻¹ rotiert. Die erste Mischung tritt von unten über einen Einlaß durch einen ringförmigen Raum zwischen den mit hoher Drehzahl rotierenden Flügeln am Laufrand und einem Schleißring in die Dispersionsmühle ein. Dieser ringförmige Raum ist ein Bereich mit hohen Scherkräften, die auf die erste Mischung einwirken und die Konsistenz der Mischung bestimmen sowie Agglomerate darin auflösen. Auch bei diesem Verfahren ist nachteilig, daß auf den Einsatz von Dispergiermitteln nicht verzichtet werden kann.

Im Lexikon der Verfahrenstechnik, Kurt Schiefer, Band 16, Deutsche Verlags-Anstalt Stuttgart, Seiten 425/426, werden Zahnscheibenmühlen beschrieben, die besonders vorteilhaft zur Naßmahlung von Farben eingesetzt werden können. Die Zahnscheibenmühlen besitzen konzentrische, ineinandergreifende Zahnringe mit scharfen Kanten.

Darüber hinaus ist es bekannt, unbehandelten TiO₂-Klinker in einem ersten Schritt in Kugelmühlen aufzumahlen, das so erhaltene Produkt einer Naßbescnichtung zu unterziehen und es anschließend einer abschließenden Feinmahlung zuzuführen, um eine besonders vorteilhafte mittlere Teilchengröße der TiO₂-Pigmente zwischen 0,1 und 1 µm einzustellen. Bei der Aufmahlung des TiO₂-Klinkers in Kugelmühlen und der anschließenden Analyse des Produkts hat sich bei der Untersuchung der relativen Häufigkeit als Funktion des Durchmessers der einzelnen TiO₂-Teilchen gezeigt, daß der dieser Funktion zugehörige Graph zwei Maxima aufweist. Dies bedeutet, daß die Mischung der TiO₂-Teilchen zwei Durchmesser aufweist, die relativ häufig zu verzeichnen sind. Darüber hinaus hat sich herausgestellt, daß diese beiden Durchmesser nicht nahe beieinander liegen, sondern der eine Durchmesser wesentlich größer ist als der andere Durchmesser. Wird nun das aus der Kugelmühle abgeführte Produkt einer Naßbeschichtung unterworfen, so werden sowohl die kleinen als auch die großen TiO₂-Teilchen mit anorganischen Substanzen beschichtet. Die anschließende Feinmahlung hat jedoch zur Folge, daß die bereits beschichteten, relativ großen TiO₂-Teilchen aufbrechen und unbeschichtete Fragmente frei werden, die bei der anschließenden Einarbeitung in Farben oder Lacken mit diesen in Kontakt kommen. Dabei kann es zu chemischen Reaktionen zwischen den Farben bzw. Lacken einerseits und den TiO₂-Teilchen an deren unbeschichteten Fragmenten andererseits kommen, was sich nachteilig auf die Qualität des Endprodukts auswirkt.

Der Erfindung liegt daher die Aufgabe zugrunde, ein Verfahren zur Herstellung von TiO₂-Pigmenten aus TiO₂-Klinker zu schaffen, bei dem auf Dispergiermittel verzichtet werden kann und das eine relativ unproblematische Einarbeitung von TiO₂-Pigmenten in Farben oder Lacken ermöglicht. Den TiO₂-Pigmenten soll dabei eine Häufigkeitsverteilung der Pigmentteilchendurchmesser zuzuordnen sein, deren Graph lediglich ein Maximum aufweist.

Die der Erfindung zugrundeliegende Aufgabe wird durch ein Verfahren zur Herstellung von TiO₂-Pigmenten aus TiO₂-Klinker gelöst, bei dem der TiO₂-Klinker ohne Zugabe von Dispergiermitteln zunächst mit Wasser oder einer anderen Flüssigkeit versetzt wird und die so erhaltene Mischung anschließend durch eine Zahnscheibenmühle geleitet wird, die erhaltene TiO₂-Aufschlämmung anschließend einer Naßbeschichtung und abschließend einer Feinmahlung unterworfen wird. Als TiO₂-Klinker ist der bei der Herstellung von TiO₂ aus dem Kalzinationsdrehrohrofen abgeführte Klinker zu verstehen. Seine mittlere Teilchengröße liegt zwischen 4 und 7 mm. In der Regel weist der TiO₂-Klinker entweder die Rutil- oder die Anatas-Modifikation auf. Die Herstellung der Mischung aus TiO₂-Klinker und Wasser beziehungsweise einer anderen Flüssigkeit erfolgt beispielsweise in zylindrischen Gefäßen, in welchen Rührvorrichtungen angeordnet sind. Als Flüssigkeiten können anorganische oder organische Flüssigkeiten wie beispielsweise Glykol eingesetzt werden. Das Wasser beziehungsweise die andere Flüssigkeit stellen das Dispersionsmittel dar und wirken somit nicht als Dispergiermittel. Als Zahnscheibenmühle können Vorrichtungen eingesetzt werden, die konzentrische, ineinandergreifende Zahnringe mit scharfen Kanten aufweisen. Darüber hinaus können sie wie In-Line-Homogenisiermaschinen gestaltet sein, die nach dem Rotor-Stator-Prinzip arbeiten. Die Naßbeschichtung erfolgt in der Weise, daß die aus der Zahnscheibenmühle abgeführte TiO₂-Aufschlämmung mit einer Lösung aus anorganischen Salzen, wie beispielsweise Aluminiumsulfat, Titanylsulfat, Zirkonylsulfat, Natriumaluminat, versetzt werden und die Kationen dieser Salze durch Zugabe von Neutralisationsmitteln wie beispielsweise Natronlauge als Hydroxide ausgefällt werden. Dabei bildet sich beispielsweise ein Überzug aus Aluminiumhydroxid, Titanoxidhydrat oder Zirkonoxidhydrat aus. Durch anschließende Filtration und Waschung werden die bei der Neutralisationsreaktion entstehenden Neutralisationssalze, wie beispielsweise Natriumsulfat, entfernt. Nach Trocknung der naßbeschichteten TiO₂-Teilchen kann die abschließende Feinmahlung trocken oder naß erfolgen. Unter dem Begriff Pigmente sind diejenigen Teilchen in Form von Primärteilchen, Aggregaten oder Agglomeraten zu verstehen, deren mittlere Teilchengröße im Bereich von 0,01 bis 10 µm liegt. Es hat sich in überraschender Weise gezeigt, daß die hergestellten TiO₂-Pigmente relativ gut in Lacken und Farben eingearbeitet werden können, wobei eine Reaktion mit den Farben oder Lacken weitgehend vermieden wird. Überraschend ist ferner, daß der TiO₂-Klinker, der Teilchen mit einem mittleren Durchmesser von 4 bis 7 mm aufweist, in einer Zahnscheibenmühle aufgemahlen werden kann, wobei Pigmente entstehen, denen eine Häufigkeitsverteilung der Pigmentteilchendurchmesser zuzuordnen ist, deren Graph lediglich ein Maximum aufweist. Dadurch ist sichergestellt, daß die aus der Naßbeschichtung abgeführten TiO₂-Pigmente bei der abschließenden Feinmahlung in der Weise behandelt werden können, daß die Beschichtung der einzelnen TiO₂-Pigmente weitgehendst erhalten bleibt, so daß eine Reaktion der TiO₂-Pigmente beispielsweise mit Farben oder Lacken, in welche sie später eingearbeitet werden, weitgehend vermieden wird.

Eine bevorzugte Ausgestaltung der Erfindung besteht darin, daß die aus der Zahnscheibenmühle abgeführte TiO₂-Aufschlämmung anschließend durch eine weitere Zahnscheibenmühle geleitet wird, bevor sie der Naßbeschichtung zugeführt wird. Dies hat den Vorteil, daß der Anteil an TiO₂-Klinker, der die Rutil-Modifikation aufweist, in der weiteren Zahnscheibenmühle erneut einer Aufmahlung unterworfen wird. Durch diese Verfahrensweise wird erreicht, daß die TiO₂-Pigmente aus Anatas und die TiO₂-Pigmente aus Rutil jeweils die weitgehend gleiche mittlere Teilchengröße aufweisen, was sich vorteilhaft bei der anschließenden Naßbeschichtung auswirkt. Die TiO₂-Pigmente aus Anatas werden dabei in der weiteren Zahnscheibenmühle keiner weiteren Aufmahlung unterworfen. Lediglich die TiO₂-Pigmente, die die Rutil-Modifikation aufweisen, werden in der weiteren Zahnscheibenmühle verkleinert und somit der Teilchengröße der TiO₂-Pigmente, die die Anatas-Modifikation aufweisen, angepaßt.

Gemäß einer weiteren bevorzugten Ausgestaltung der Erfindung wird die Suspension nach Austritt aus der Naßbeschichtung einer Trockenmahlung als Feinmahlung unterzogen. Für die Trockenmahlung eignen sich beispielsweise Hammer- und Schlagkreuzmühlen, sowie Pendel- oder Dampfstrahlmühlen. Gegebenenfalls können bei der Trockenmahlung Mahlhilfsmittel zugegeben werden. Bei der Trockenmahlung ist vorteilhaft, daß auf das Ansetzen einer wäßrigen Suspension, die die beschichteten TiO₂-Pigmente enthält, vor der Feinmahlung verzichtet werden kann.

Nach einer weiteren Ausgestaltung der Erfindung erfolgt die Trockenmahlung in Dampfstrahlmühlen. Dies hat den Vorteil, daß sich die mittlere Teilchengröße der TiO₂-Pigmente auf relativ einfache Weise verkleinern läßt.

Gemäß einer weiteren bevorzugten Ausgestaltung der Erfindung wird der TiO₂-Klinker kontinuierlich in einen Einlauftrichter geleitet, während der Einlauftrichter innen gleichzeitig mit Wasser oder einer anderen Flüssigkeit in tangentialer Strömung beaufschlagt wird. Das Wasser beziehungsweise die andere Flüssigkeit werden dabei im oberen Teil des Einlauftrichters tangential an der Innenfläche des Einlauftrichters aufgegeben und laufen spiralförmig an der Innenfläche des Einlauftrichters nach unten, wobei sie kontinuierlich mit dem TiO₂-Klinker vermischt werden. Dies bewirkt eine vorteilhafte homogene Verteilung des TiO₂-Klinkers im Wasser beziehungsweise in der anderen Flüssigkeit, was eine gleichmäßige Aufmahlung des TiO₂-Klinkers in der Zahnscheibenmühle zur Folge hat.

Eine weitere Ausgestaltung der Erfindung besteht darin, daß der TiO₂-Klinker dem Einlauftrichter über eine Dosiervorrichtung zugeleitet wird. Als Dosiervorrichtung kann dabei beispielsweise eine Förderschnecke eingesetzt werden. Auf diese Weise wird eine homogene Verteilung des TiO₂-Klinkers im Wasser beziehungsweise in der anderen Flüssigkeit erleichtert.

Gegenstand der Erfindung ist schließlich die Verwendung des Verfahrens zur Herstellung von TiO₂-Pigmenten für die Einarbeitung in Farben oder Lacken. Dadurch können in vorteilhafter Weise Anstrichmassen hergestellt werden, die eine relativ hohe Langzeitbeständigkeit aufweisen.

Die Erfindung wird nachfolgend anhand der Zeichnung (Fig. 1 bis 5) näher erläutert.
- Fig. 1: zeigt die Dosiervorrichtung mit nachgeschaltetem Einlauftrichter und dem Einlauftrichter nachgeschalteter Zahnscheibenmühle.
- Fig. 2: zeigt die Dosiervorrichtung, den nachgeschalteten Einlauftrichter und zwei, dem Einlauftrichter nachgeschaltete, hintereinander angeordnete Zahnscheibenmühlen.
- Fig. 3: zeigt die prinzipielle Verteilung der Häufigkeit als Funktion des Durchmessers der TiO₂-Pigmente bei Einsatz mindestens einer Zahnscheibenmühle.
- Fig. 4: zeigt die prinzipielle Verteilung der Häufigkeit als Funktion des Durchmessers der TiO₂-Pigmente bei Einsatz einer Kugelmühle.
- Fig. 5: zeigt eine Zahnscheibenmühle im Querschnitt.

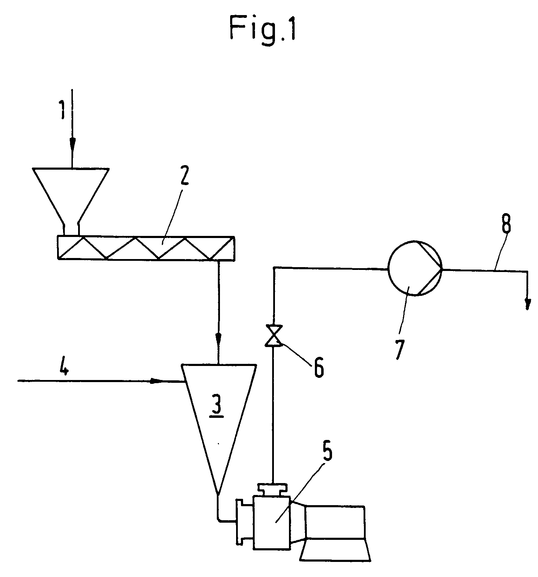

In Fig. 1 ist die Dosiervorrichtung (2) mit nachgeschaltetem Einlauftrichter (3) und Zahnscheibenmühle (5) dargestellt. Der TiO₂-Klinker (1) gelangt über die Dosiervorrichtung (2) in den Einlauftrichter (3), der innen gleichzeitig mit Wasser (4) oder einer anderen Flüssigkeit in tangentialer Strömung beaufschlagt wird. Der TiO₂-Klinker (1) wird im Einlauftrichter (3) im Wasser (4) beziehungsweise in der anderen Flüssigkeit homogen verteilt. Die so erhaltene Mischung wird anschließend einer, dem Einlauftrichter (3) nachgeschalteten Zahnscheibenmühle (5) zugeführt. In der Zahnscheibenmühle (5) wird der TiO₂-Klinker (1), der Teilchen mit einem mittleren Durchmesser von 4 bis 7 mm enthält, aufgemahlen. Die aus der Zahnscheibenmühle (5) ausgetragenen TiO₂-Pigmente weisen eine mittlere Teilchengröße auf, die im Bereich von 0,01 bis 10 µm liegt. Die aus der Zahnscheibenmühle (5) abgeführte TiO₂-Aufschlämmung wird über ein Ventil (6), eine Flüssigkeitspumpe (7) und eine Leitung (8) einer Naßbeschichtung (nicht dargestellt) zugeleitet. In der Naßbeschichtung werden die TiO₂-Pigmente mit Metallhydroxiden wie beispielsweise Aluminiumhydroxid, Titanoxidhydrat oder Zirkonoxidhydrat beschichtet. Die beschichteten TiO₂-Pigmente werden abschließend einer Feinmahlung unterworfen, wobei eine mittlere Teilchengröße zwischen 0,1 und 1 µm eingestellt wird.

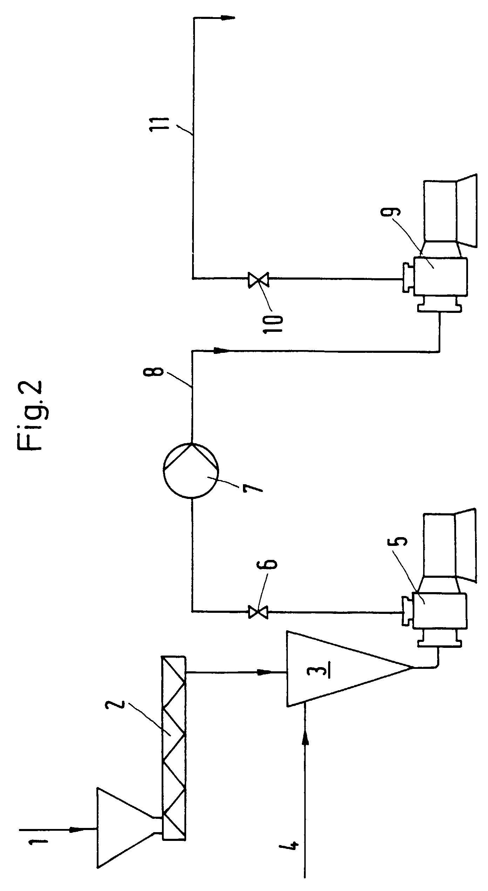

In Fig. 2 sind die Dosiervorrichtung (2), der Einlauftrichter (3) und zwei dem Einlauftrichter (3) nachgeschaltete, hintereinander angeordnete Zahnscheibenmühlen (5, 9) dargestellt. Die aus dem Einlauftrichter (3) abgeführte Mischung wird zunächst der einen Zahnscheibenmühle (5) zugeleitet, wobei die TiO₂-Pigmente aufgemahlen werden und eine mittlere Teilchengröße eingestellt wird, die im Bereich zwischen 0,01 und 10 µm liegt. In der Regel weist der TiO₂-Klinker (1) entweder die Anatas- oder die Rutil-Modifikation auf. Es hat sich herausgestellt, daß der TiO₂-Klinker (1), der die Anatas-Modifikation aufweist, in der einen Zahnscheibenmühle (5) auf eine kleinere Teilchengröße aufgemahlen werden kann als dies bei dem TiO₂-Klinker (1) der Fall ist, der die Rutil-Modifikation aufweist. Um die Teilchengröße der Rutil-Modifikation der Teilchengröße der Anatas-Modifikation anzupassen, wird die aus der Zahnscheibenmühle (5) abgeführte TiO₂-Aufschlämmung, deren Teilchen die Rutil-Modifikation aufweisen, über ein Ventil (6), eine Flüssigkeitspumpe (7) und über die Leitung (8) anschließend in vorteilhafter Weise einer weiteren Zahnscheibenmühle (9) zugeleitet und einer weiteren Aufmahlung unterworfen. Die aus der weiteren Zahnscheibenmühle (9) abgeführte Suspension enthält TiO₂-Pigmente der Rutil-Modifikation die weitgehend die gleiche mittlere Teilchengröße aufweisen wie TiO₂-Pigmente der Anatas-Modifikation. Die aus der Zahnscheibenmühle (9) abgeführte Suspension wird über ein Ventil (10) und die Leitung (11) anschließend der Naßbeschichtung (nicht dargestellt) zugeführt.

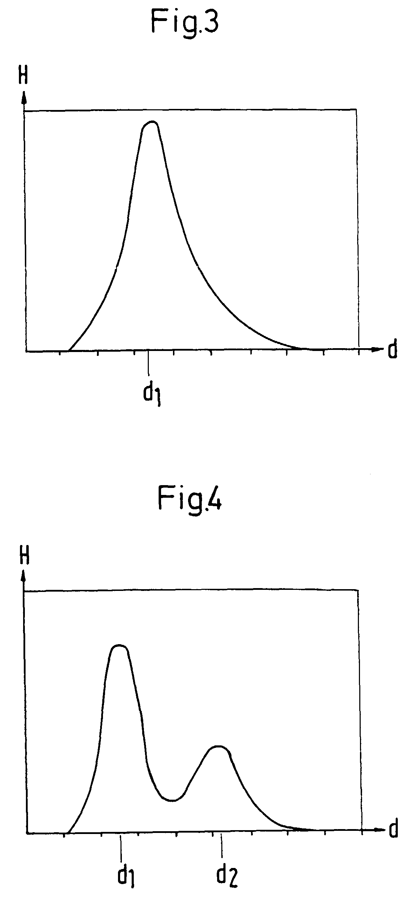

In Fig. 3 ist die Häufigkeit als Funktion des Durchmessers der TiO₂-Pigmente dargestellt, sofern der TiO₂-Klinker (1) in einer Zahnscheibenmühle (5) aufgemahlen wird. Dabei handelt es sich um den prinzipiellen Verlauf der Häufigkeitsfunktion, wobei die Abszisse logarithmisch eingeteilt ist. Wie in Fig. 3 dargestellt ist, weist die Häufigkeitsfunktion lediglich ein Maximum d₁ auf. Die anschließende Feinmahlung kann somit vorteilhaft unter Berücksichtigung der lediglich mittleren Teilchengröße erfolgen, da die mittlere Teilchengröße nicht extrem vom Maximum der Häufigkeitsfunktion abweicht.

In Fig. 4 ist die Häufigkeit als Funktion des Durchmessers der TiO₂-Pigmente dargestellt, sofern die Suspension nicht in einer Zahnscheibenmühle (5), sondern in einer Naß-Kugelmühle aufgemahlen wird, wie es nach dem Stand der Technik vorgesehen ist. Die Abszisse ist logarithmisch eingeteilt. Wie in Fig. 4 dargestellt ist, weist die Häufigkeitsfunktion zwei Maxima d₁ und d₂ auf, die relativ weit auseinander liegen. Auch hierbei handelt es sich um einen prinzipiellen Verlauf der Häufigkeitsfunktion. Die abschließende Feinmahlung kann in diesem Fall nicht nur auf die mittlere Teilchengröße abgestellt werden, da sich mit der mittleren Teilchengröße die Häufigkeit der auftretenden Durchmesser der TiO₂-Pigmente nicht erfassen läßt. Dies führt dazu, daß die beschichteten TiO₂-Pigmente bei der abschließenden Feinmahlung in der Weise aufgebrochen und zerkleinert werden, daß der Anteil der nicht beschichteten Oberfläche durch Freiwerden unbeschichteter Fragmente relativ stark vergrößert wird, so daß die auf diesem Weg erhaltenen TiO₂-Pigmente gegebenenfalls mit den Farben oder Lacken reagieren können, in die sie eingearbeitet werden sollen.

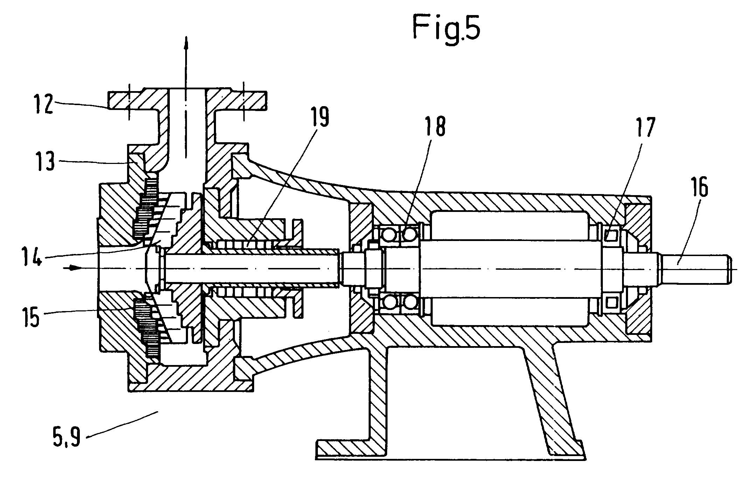

In Fig. 5 ist die Zahnscheibenmühle (5, 9) im Querschnitt dargestellt. Dabei handelt es sich um eine In-Line-Homogenisiermaschine, wie sie zum Beispiel unter der Bezeichnung "Supraton" von Dorr-Oliver in Deutschland hergestellt wird. Die Zahnscheibenmühle (5, 9) arbeitet nach dem Rotor-Stator-Prinzip. Rotor (14) und Stator (15) bestehen dabei aus konzentrischen Werkzeugringen, die radial geschlitzt und/oder gebohrt sind. Während des Betriebs greifen die Werkzeugringe von Rotor (14) und Stator (15) koaxial ineinander und laufenmit hoher Relativgeschwindigkeit berührungslos aneinander vorbei. Dabei können Relativgeschwindigkeiten von 50 m/sec erreicht werden. Werden mehrere Rotoreinheiten auf einer Antriebswelle mit mehreren zugehörigen Statoreinheiten kombiniert, bilden sich Kammern aus Rotor- und Statoreinheiten, die von der Mischung mehrfach durchlaufen werden können. Die Umfangsgeschwindigkeit der Rotoreinheiten und die Geometrie der Kammern bestimmen die Feinheit des Endprodukts. Die aus dem Einlauftrichter (3) abgeführte Mischung (nicht dargestellt) tritt in Pfeilrichtung axial in das Gehäuse am Statorträger (13) der Zahnscheibenmühle (5, 9) ein, durchläuft das Rotor-Stator-System und verläßt es in radialer Richtung nach oben in Pfeilrichtung. Die Mischung wird dabei verschiedenen physikalischen Effekten und Scherkräften ausgesetzt, was zu einer Verkleinerung der Teilchengröße des TiO₂-Klinkers führt. Am Gehäusering (12) ist eine Leitung angeordnet (nicht dargestellt), in welcher die austretende TiO₂-Aufschlämmung einer weiteren Zahnscheibenmühle oder direkt einer Naßbeschichtung zugeleitet wird. Der Rotor (14) ist an einer Welle (16) angeordnet, die mittels eines Zylinderrollenlagers (17) und eines Schrägkugellagers (18) fixiert wird. Eine Abdichtung zum Rotor-Stator-System erfolgt über eine Wellendichtung (19).

Der Gegenstand der Erfindung wird anhand der nachstehenden Beispiele näher erläutert.

### Beispiel 1

2,4 t/h TiO₂-Klinker werden kontinuierlich einem Einlauftrichter zugeführt. Ausgehend von der Oberkante des Einlauftrichters, werden gleichzeitig 8,1 m³/h Wasser tangential in den Einlauftrichter eingeleitet.
Die unten aus dem Einlauftrichter abgeführte Suspension wird anschließend einer Zahnscheibenmühle zugeführt, die mit einer Leistung von 7,5 kW arbeitet und mit einer Umfangsgeschwindigkeit von 50 m/sec betrieben wird.
Die aus der Zahnscheibenmühle abgeführte TiO₂-Pigment-Suspension wird zur Bestimmung des Siebrückstandes mit Wasser als Spülflüssigkeit gemäß DIN 53195 unterzogen. Das dazu eingesetzte Sieb weist einen Durchmesser von 200 mm mit einem Drahtsiebboden mit 0,045 mm Maschenweite nach DIN 41 88 Teil 1 auf.
Der relativen Häufigkeit als Funktion des Durchmessers der TiO₂-Teilchen in der Suspension ist ein Graph zuzuordnen, der lediglich ein Maximum aufweist. Die Häufigkeitsfunktion wird nach der HELOS-Methode (Helium-Neon-Laser optisches Beugungsspektrometer; Gerätehersteller: Fa. Sympatec, Clausthal-Zellerfeld) bestimmt.
Für die Anatasmodifikation ergibt sich ein Siebrückstand, der unter 2,0 % liegt; die mittlere Teilchengröße liegt bei 2,2 µm. Für die Rutilmodifikation ergibt sich ein Siebrückstand, der unter 10 % liegt. Die mittlere Teilchengröße liegt bei 3,1 µm.

### Beispiel 2

In den Einlauftrichter gemäß Beispiel 1 werden 2,4 t/h an TiO₂-Klinker über eine Dosierschnecke eingeleitet. Gleichzeitig werden 8,3 m³/h Wasser tangential in den Einlauftrichter eingeleitet.
Die entstehende Suspension wird am unteren Teil des Einlauftrichters abgeführt und einer ersten Zahnscheibenmühle zugeleitet, deren Leistung 7,5 kW beträgt und die mit einer Umfangsgeschwindigkeit von 50 m/sec betrieben wird. Die aus der Zahnscheibenmühle abgeführte Suspension, wird über eine Flüssigkeitspumpe einer weiteren Zahnscheibenmühle zugeführt, deren Leistung ebenfalls 7,5 kW und deren Umfangsgeschwindigkeit ebenfalls 50 m/sec betragen.
Die aus der zweiten Zahnscheibenmühle abgeführte TiO₂-Pigmentsuspension des Siebrückstandes wird zur Bestimmung mit Wasser als Spülflüssigkeit gemäß DIN 53195 unterzogen.
Das dazu eingesetzte Sieb weist einen Durchmesser von 200 mm mit einem Drahtsiebboden mit 0,045 mm Maschenweite nach DIN 4188 Teil 1 auf.
Der relativen Häufigkeit als Funktion des Durchmessers der TiO₂-Teilchen in der Suspension ist ein Graph zuzuordnen, der lediglich ein Maximum aufweist. Die Häufigkeitsfunktion wird nach der HELOS-Methode (Helium-Neon-Laser optisches Beugungsspektrometer; Gerätehersteller: Fa. Sympatec, Clausthal-Zellerfeld) bestimmt.
Für Anatasmodifikation ergibt sich ein Siebrückstand der unter 1 liegt; die mittlere Teilchengröße liegt bei 1,7 µm. Für die Rutilmodifikation ergibt sich ein Siebrückstand der unter 3 % liegt; die mittlere Teilchengröße liegt bei 2,8 µm.

Ein Vergleich von Beispiel 1 mit Beispiel 2 (Teilchengröße in Verbindung mit Siebrückstand) macht deutlich, daß lediglich die Rutilmodifikation in der weiteren Zahnscheibenmühle aufgemahlen wird. Durch die Behandlung der aus der ersten Zahnscheibenmühle abgeführten Suspension in einer weiteren Zahnscheibenmühle läßt sich der Siebrückstand und die mittlere Teilchengröße der Rutilmodifikation weitgehend dem Siebrückstand und der mittleren Teilchengröße der Anatasmodifikation anpassen.
Die aus der weiteren Zahnscheibenmühle abgeführten TiO₂-Pigmentsuspension der Rutilmodifikation wird in der Naßbeschichtung mit Metallhydroxiden wie Aluminiumhydroxid o.ä. beschichtet und nach Waschung und Trocknung anschließend in einer Dampfstrahlmühle bis zu einer mittleren Teilchengröße von 0,35 µm aufgemahlen.
Anschließend erfolgt die Einarbeitung des Pigmentes in einen mittelöligen Alkydharzlack mit einer Pigmentvolumenkonzentration von 20 %. Der fertige Lack wird auf Probebleche aufgetragen und einer Kurzzeitbewitterung unterzogen. Als Maß für die Wetterbeständigkeit der Lacke (und damit für die Reaktivität unbeschichteter, während der Dampfstrahlmahlung aufgebrochener Pigmentoberfläche) wird der 20°-Glanzverlust des Lackes gemäß DIN ISO 8781/3 und ISO 2813 mit der Zeit herangezogen.
Bei einem Ausgangsglanz von 84 werden nach 300 bzw. 500 Stunden Bewitterung noch Glanzwerte von 74 bzw. 40 gemessen.

### Beispiel 3

2,4 t/h TiO₂-Klinker werden zusammen mit 8,1 m³/h Wasser in einen Durchflußmischer mit gestuftem konischen Mischraum aufgegeben. Die aus dem Mischbehälter austretende Suspension wird anschließend zur Bestimmung des Siebrückstandes mit Wasser als Spülflüssigkeit gemäß DIN 53195 unterzogen. Das dazu eingesetzte Sieb weist einen Durchmesser von 200 mm mit einem Drahtsiebboden mit 0,045 mm Maschenweite nach DIN 4188 Teil 1 auf.
Der relativen Häufigkeit als Funktion des Durchmessers der TiO₂-Teilchen in der Suspension ist ein Graph zuzuordnen, der lediglich ein Maximum aufweist. Die Häufigkeitsfunktion wird nach der HELOS-Methode (Helium-Neon-Laser optisches Beugungsspektrometer; Gerätehersteller: Fa. Sympatec, Clausthal-Zellerfeld) bestimmt.
Für die Anatasmodifikation ergibt sich ein Siebrückstand, der unter 1,5 liegt; die mittlere Teilchengröße liegt bei 1,9 µm. Für die Rutilmodifikation ergibt sich ein Siebrückstand, der unter 8,5 % liegt. Die mittlere Teilchengröße liegt bei 3,0 µm.

### Beispiel 4 (Vergleichsbeispiel)

Einer Kugelmühle mit einem Durchmesser von 2,4 m und einer Mahlkörperfüllung aus SiO₂-haltigen Steinen werden kontinuierlich 5 t/h TiO₂-Klinker mit 15 m³/h Wasser zugeführt. Die Kugelmühle, deren Antriebsleistung 220 kW beträgt, wird mit einer Drehzahl von 20 min⁻¹ betrieben. Die aus der Kugelmühle abgeführte Suspension wird anschließend zur Bestimmung des Siebrückstandes mit Wasser als Spülflüssigkeit gemäß DIN 53195 unterzogen. Das dazu eingesetzte Sieb weist einen Durchmesser von 200 mm mit einem Drahtsiebboden mit 0,045 mm Maschenweite nach DIN 4188 Teil 1 auf.
Der relativen Häufigkeit als Funktion des Durchmessers der TiO₂-Teilchen in der Suspension ist ein Graph zuzuordnen, der zwei Maxima aufweist. Die Häufigkeitsfunktion wird nach der HELOS-Methode (Helium-Neon-Laser optisches Beugungsspektrometer; Gerätehersteller: Fa. Sympatec, Clausthal-Zellerfeld) bestimmt. Für die Anatasmodifikation ergibt sich ein Siebrückstand, der unter 5 % liegt; die mittlere Teilchengröße liegt bei 2,3 µm. Für die Rutilmodifikation ergibt sich ein Siebrückstand von 19,7 %; die mittlere Teilchengröße liegt bei 2,8 µm.
Die aus der Kugelmühle abgeführte TiO₂-Pigment-Suspension der Rutil-Modifikation wird in der Naßbeschichtung mit Metallhydroxiden wie Aluminiumhydroxid o.ä. beschichtet und anschließend in einer Dampfstrahlmühle bis zu einer mittleren Teilchengröße von 0,35 µm aufgemahlen.
Anschließend erfolgt die Einarbeitung des Pigmentes in einen mittelöligen Alkydharzlack mit einer Pigmentvolumenkonzentration von 20 %. Der fertige Lack wird auf Probebleche appliziert und einer Kurzzeitbewitterung unterzogen. Als Maß für die Wetterbeständigkeit der Lacke (und damit für die Reaktivität unbeschichteter, während der Dampfstrahlmahlung aufgebrochener Pigmentoberfläche) wird der 20°-Glanzverlust des Lackes gemäß Beispiel 2 mit der Zeit herangezogen.

Bei einem Ausgangsglanz von ebenfalls 84 werden nach 300 bzw. 500 Stunden nur noch Glanzwerte von 68 bzw. 26 gemessen.

## Patentansprüche

1. Verfahren zur Herstellung von TiO₂-Pigmenten aus TiO₂-Klinker (1), bei dem der TiO₂-Klinker (1) ohne Zugabe von Dispergiermitteln zunächst mit Wasser (4) oder einer anderen Flüssigkeit versetzt wird und die so erhaltene Mischung anschließend durch eine Zahnscheibenmühle (5) geleitet wird, die erhaltene TiO₂-Aufschlämmung anschließend einer Naßbeschichtung und abschließend einer Feinmahlung unterworfen wird.

2. Verfahren nach Anspruch 1, bei dem die aus der Zahnscheibenmühle (5) abgeführte TiO₂-Aufschlämmung anschließend durch eine weitere Zahnscheibenmühle (9) geleitet wird, bevor sie der Naßbeschichtung zugeführt wird.

3. Verfahren nach Anspruch 1 oder Anspruch 2, bei dem die Suspension nach Austritt aus der Naßbeschichtung einer Trockenmahlung als Feinmahlung unterzogen wird.

4. Verfahren nach Anspruch 3, bei dem die Trockenmahlung in Dampfstrahlmühlen erfolgt.

5. Verfahren nach einem der Ansprüche 1 bis 4, bei dem der TiO₂-Klinker (1) kontinuierlich in einen Einlauftrichter (3) geleitet wird, während der Einlauftrichter (3) innen gleichzeitig mit Wasser (4) oder einer anderen Flüssigkeit in tangentialer Strömung beaufschlagt wird.

6. Verfahren nach Anspruch 5, bei dem der TiO₂-Klinker dem Einlauftrichter (3) über eine Dosiervorrichtung (2) zugeleitet wird.

7. Verwendung des Verfahrens nach einem der Ansprüche 1 bis 6 zur Herstellung von TiO₂-Pigmenten für die Einarbeitung in Farben oder Lacken.

## Claims

1. A process for the production of TiO₂ pigments from TiO₂ clinker (1), in which first water (4) or another liquid is added to the TiO₂ clinker (1), without the addition of dispersing agents, and the resulting mixture is then passed through a toothed-disc mill (5), and the resulting TiO₂ slurry then undergoes wet coating and finally fine grinding.

2. A process according to Claim 1, in which the TiO₂ slurry removed from the toothed-disc mill (5) is then passed through an additional toothed-disc mill (9) before being sent to the wet coating stage.

3. A process according to Claim 1 or Claim 2, in which the suspension after emerging from the wet coating stage undergoes dry grinding as the fine grinding operation.

4. A process according to Claim 3, in which the dry grinding is effected in steam-jet mills.

5. A process according to one of Claims 1 to 4, in which the TiO₂ clinker (1) is passed continuously into a feed hopper (3), while the feed hopper (3) is simultaneously supplied internally with water (4) or another liquid in a tangential flow.

6. A process according to Claim 5, in which the TiO₂ clinker is fed to the feed hopper (3) via a metering device (2).

7. The use of the process according to one of Claims 1 to 6 for the production of TiO₂ pigments for working into paints or varnishes.

## Revendications

1. Procédé de fabrication de pigments de TiO₂ à partir de clinkers (1), dans lequel on mélange le clinker (1) de TiO₂ sans addition d'agent de dispersion d'abord à de l'eau (4) ou à un autre liquide et on envoie le mélange ainsi obtenu ensuite dans un broyeur (5) à disques dentés, on soumet ensuite la suspension de TiO₂ obtenue à un revêtement en voie humide et finalement à un broyage fin.

2. Procédé suivant la revendication 1, qui consiste à envoyer ensuite la suspension de TiO₂ sortie du broyeur (5) à disques dentés à un autre broyeur (9) à disques dentés, avant de l'envoyer au revêtement en voie humide.

3. Procédé selon la revendication 1 ou la revendication 2, qui consiste à soumettre la suspension à la sortie du revêtement en voie humide à un broyage à sec en tant que broyage fin.

4. Procédé selon la revendication 3, qui consiste à effectuer le broyage à sec dans des broyeurs à jet de vapeur.

5. Procédé selon l'une des revendications 1 à 4, qui consiste à envoyer le clinker (1) de TiO₂ en continu dans une trémie (3) d'alimentation, tout en alimentant la trémie (3) d'alimentation à l'intérieur en eau (4) ou en un autre liquide suivant un courant tangentiel.

6. Procédé selon la revendication 5, qui consiste à envoyer le clinker de TiO₂ à la trémie (3) d'alimentation par l'intermédiaire d'un dispositif d'addition de manière dosée.

7. Utilisation du procédé selon l'une des revendications 1 à 6 pour la fabrication de pigments de TiO₂ destinés à être incorporés dans des peintures ou des vernis.
